# EUROPEAN PATENT SPECIFICATION

(11) **EP 1 906 588 B1**
(45) Date of publication and mention of the grant of the patent: **25.04.2012**
(21) Application number: 06753019.6
(22) Date of filing: 26.06.2006
(51) Int. Cl.: H04L 12/24, H04L 29/06

(54) **Method and system for correlating information associated with a user in a nass**
Verfahren und System zur Korrelation von Informationen über einen Benutzer in einem Nass
Procédé et système pour la mise en relation d'informations associées a l'utilisateur dans un système nass

(30) Priority: 04.07.2005 CN 200510080375
(43) Date of publication of application: 02.04.2008
(73) Proprietor: Huawei Technologies Co., Ltd., Longgang District, Shenzhen Guangdong 518129 (CN)
(72) Inventor: GONG, Xiaoyu, Huawei Administration Building, Shenzhen, Guangdong 518129 (CN)
(74) Representative: Kreuz, Georg Maria
(86) International application number: PCT/CN2006/001444
(87) International publication number: WO 2007/003105

(56) References cited:
- WO-A2-2004/082214
- US-A1- 2003 152 038
- "NGN Functional Architecture; Network Attachment Subsystem; Release 1; Draft ETSI ES 02021" ETSI STANDARDS, LIS, SOPHIA ANTIPOLIS CEDEX, FRANCE, no. V0.4.3, 30 June 2004 (2004-06-30), pages 1-27, XP014028847 ISSN: 0000-0001
- XU HEYUAN: 'NGN Architecture' TELECOMMUNICATIONS ENGINEERING TECHNOLOGY AND STANDARDIZATION March 2005, pages 3 - 8
- HUAWEI: 'DHCP option for CLF/NASS' IEFT PROGRESS REPORT, [Online] June 2005, XP015042867 Retrieved from the Internet: <URL:http://www.draft-lijun-dhc-clf-nass-op tion-00.txt>

## Description

### Field of the Invention

The present invention relates to the technical field of network communication, in particular to a method for correlating user-associated information in Network Attachment Subsystem (NASS), a system for correlating user-associated information in NASS.

### Background of the invention

Today, ITU-T (International Telecommunications Union-Telecommunication Standardization Sector) and ETSI (European Telecommunications Standards Institute), serving as international and European telecommunications standardization organizations, respectively are standardizing the network architecture of NGN (Next Generation Network), in which the concept of network consolidation between fixed network and mobile network is a highlight; the NGN Architecture version 1 emphasizes the support for nomadic feature of fixed Customer Premises Equipments (CPEs).

NASS is on the transport control layer in the NGN architecture, and is mainly responsible for IP address and parameter assignment, network access authentication management, and user location information acquisition and storage for CPEs, and provides relevant user location information and profile data inquiry functions to the Service Control and Application Subsystem and the Resource and Admission Control Subsystem; NASS is a subsystem that accomplishes management of network attachment information.

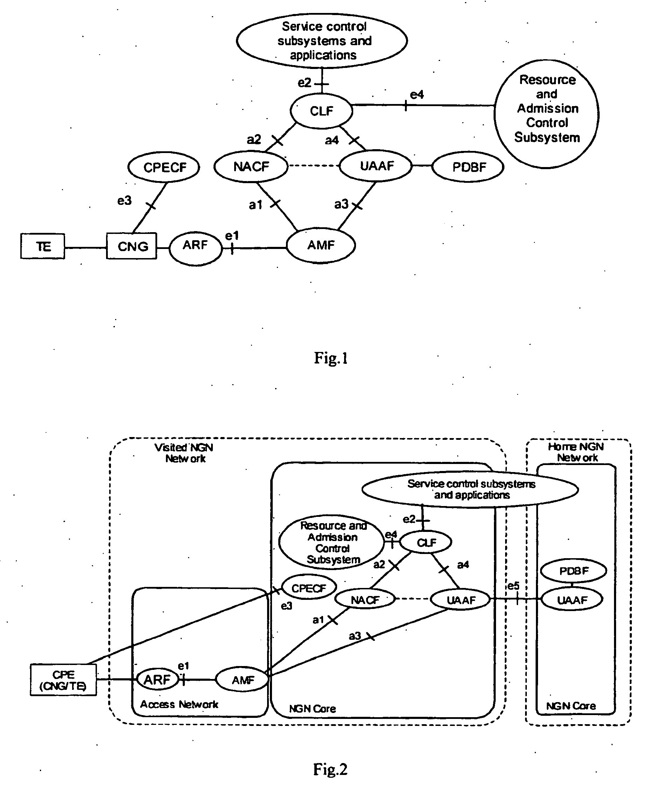

The network architecture of a NASS that supports non-nomadic users and non-roaming users is shown in Fig. 1; the network architecture of a NASS that supports nomadic users and roaming users is shown in Fig.2.

As shown in Fig. 1 and Fig.2, a NASS mainly includes the following function entities:
an AMF (Access Management Function) entity, designed to coordinate and forward the network access requests initiated by CPEs (e.g., requesting a NACF (Network Access Configuration Function) entity to assign IP addresses and other network parameters to the CPEs), and interact with a UAAF (User Access Authorization Function) entity to authenticate, authorize, or reject the users' network access activities;
the NACF is mainly designed to assign IP addresses to CPEs and issue other network configuration parameters (e.g., DNS (Domain Name Server) address, proxy address for session signaling,) to the CPEs;
a CLF (Connectivity Session Location Function) entity, mainly designed to correlate the user ID with the physical/geographical location information, IP address, and other information of the user when the user uses a specific connectivity session service;
the UAAF is mainly designed to authenticate and authorize the users who access the network. The UAAF shown in Fig.1 is the user's home location UAAF; the UAAF shown in Fig.2 includes: the user's home location UAAF and nomadic/roaming location UAAF;
a PDBF (Profile Data Base Function) entity, mainly designed to store the users' authentication information, user ID authentication method, additional important data

The external interfaces in a NASS system mainly include:
an interface e1 between the AMF and CPE, which interface e1 is used by the CPE to initiate access requests to the network; the ARF (Access Relay Function) entity between AMF and CPE can implement access request relay function, and can insert the network location information for CPE access in the access authentication requests and access configuration requests. If the AMF can obtain the network location information of the CPE, then the AMF has the capability of inserting the network location information of CPE access in the user access request and access configuration request;
an interface e2 between the CLF and SCAS (Service Control and Application Subsystem), which interface e2 is used by the NASS to provide the user's access location information (e.g., access device ID, line ID, etc.), the access authentication result information, etc., to the SCAS;
an interface e4 between CLF and RACS (Resource and Admission Control Subsystem), which interface e4 is used by the CLF to provide user-associated information to the RACS, so that the RACS can decide whether to accept a service resource request according to the user profile data and the user address information, and decide the resource allocation method if the RACS decides to accept the resource request.

In the existing NASS network architecture, the IP address and network location information of CPE is bound by the NACF, and the bound information is transmitted via the interface a2 between NACF and CLF to the CLF; the user ID information and relevant profile data are bound by the UAAF, and the bound information is transmitted via the interface a4 between UAAF and CLF to the CLF. For each specific connectivity session, the CLF must correlate the user-associated information sent from different entities via different interfaces.

At present, the CLF correlates the user-associated information from different entities via different interfaces with the following method:
statically configure the correlation between partial information in advance in the CLF, for example, correlate the user ID information with the network location information of the CPE in advance in the CLF; since the dynamically bound information transmitted from the NACF contains the network location information of the CPE and the dynamically bound information transmitted from the UAAF contains the user ID information and relevant profile data, the CLF can implement a correlation between the user ID information and physical/geographical location information, IP address, and network location information, in accordance with the statically configured partial correlation information.

In the NASS network architecture shown in Fig.1, for non-nomadic users or non-roaming users, though the method of establishing correlation in partial information in advance is heavy in workload and not flexible, it is feasible because the user ID information and the network location of CPE are relatively fixed.

In the NASS network architecture shown in Fig.2, for nomadic users and roaming users, since the user ID information and the network location of CPE are dynamic, when the CPE nomadizes or roams from the Home NGN Network to a Visited NGN Network, the user ID information stored in the Home NGN Network must be correlated with the network location information allocated in the Visited NGN Network dynamically, and then the correlation must be stored in the CLF. Therefore, the static correlation configuration method described above is essentially infeasible for nomadic users or roaming users.
The document "NGN Functional Architecture; Network Attachment Subsystem; release 1; V0.4.3") describes the architecture of the Network Attachment Subsystem and its role in the TISPAN NGN architecture as defined in ETSI ES2007.

### Summary of the Invention

The present invention provides a method and a system for correlating user-associated information in NASS, in which the CLF correlates the user-associated information transmitted from the UAAF and the NACF dynamically.

The present invention provides a method and system for correlating user-associated information in NASS as defined in claim 1 and claim 2.

It is seen from above description of the technical solution: in the present invention, since the user-associated information transmitted from the UAAF and the NACF to the CLF contains predefined correlation information, the CLF can correlate the user-associated information transmitted from the UAAF and the NACF dynamically, and therefore the procedure of configuring partial correlation information in the CLF statically can be avoided, and the process of correlating user-associated information can be simplified; since the present invention employs a dynamic correlation approach, the method for correlating user-associated information in the present invention is applicable to both non-roaming/non-nomadic CPEs and roaming/nomadic CPEs; therefore, the present invention provides a practical, convenient, fast, and simplified method for correlating user-associated information for roaming/nomadic CPEs; if the predefined correlation information is the address information of the CPE, various methods provided in the present invention enable the UAAF to obtain the address information of the CPE; therefore, with the technical solution provided in the present invention, the object of enhancing flexibility of the user-associated information correlation method and improving the user-associated information correlation mechanism is attained.

### Brief Description of the Drawings

Fig. 1 is a schematic diagram of the network architecture of a NASS that supports non-nomadic users and non-roaming users;

Fig.2 is a schematic diagram of the network architecture of a NASS that supports nomadic users and roaming users;

Fig.3 is a schematic diagram of the system for correlating user-associated information provided in the present invention.

### Detailed Description of the Embodiments

If the dynamically bound user-associated information transmitted from both the NACF and the UAAF contains correlated information, i.e., the user-associated information uploaded from the NACF and the UAAF to the CLF contains a common attribute, the CLF can dynamically correlate the user-associated information from the NACF and the UAAF directly. Therefore, not only the procedure of configuring partial correlation information statically in the CLF can be avoided, but also the correlation in user-associated information can be implemented for roaming/nomadic CPEs.

Therefore, the core idea of the present invention is: the NACF transmits the first user-associated information containing predefined correlation information to the CLF, the UAAF transmits the second user-associated information containing predefined correlation information to the CLF, and the CLF correlates the first user-associated information with the second user-associated information in accordance with the predefined correlation information.

The predefined correlation information mentioned in the present invention is the IP address information of the CPE in the address information of the CPE, in this way, the address information of the CPE can be carried in an access request from the CPE and transmitted through the access network to the UAAF, so that the UAAF can obtain the address information of the CPE conveniently and transmit the address information to the CLF; in that way, the user-associated information transmitted from the UAAF and the NACF to the CLF can contain a common attribute, with which the CLF can correlate the user-associated information.

The network location information of CPE can be represented in a variety of forms flexibly, for example, the network location information can be represented in any of the following three forms.

The physical network access ID of the CPE (e.g., Line ID), which is the physical network address information of a CPE.

The logical network access ID of the CPE (e.g., VPi/VCi ID in ATM, or VLAN ID in Ethernet), which is the logical network address information of a CPE.

Combined information in other formats that represents the network location of the CPE (e.g., Node ID + Frame Number/Slot Number /Sub-Slot Number /Port Number + [VPi, VCi] + [VLAN] of the network device, which is a combination of the physical network address information and logical network address information of a CPE).

Hereunder the method for correlating user-associated information for roaming/nomadic CPEs will be described in a case in which the predefined correlation information is the network location information of the CPE in the address information of the CPE.

Step 1. the CPE initiates an access request to the network; the ARF (Access Relay Function) entity relays the access request and inserts the network location information of the CPE into the access request. Here, the access request includes access authentication request and access configuration request, wherein, the access authentication request and the access configuration request can be two separate access requests or a combined access request, i.e., a single access request containing access authentication request information and access configuration request information.

Step 2: the AMF coordinates and forwards the access request transmitted from the ARF, i.e., the AMF requests the NACF to assign network configuration parameters (e.g., IP address), requests the UAAF to authenticate and authorize the user ID, and ensures the access requests transmitted to the NACF and the UAAF contain the network location information of the CPE.

If the ARF doesn't insert the network location information of the CPE into the access request in step 1, the AMF can insert the network location information of the CPE into the access request by itself in step 2.

The interface protocol between the AMF and the NACF is DHCP or Radius; and the interface protocol between the AMF and the UAAF is Radius or Diameter.

Step 3: after receiving the access request transmitted from the AMF, the visited location UAAF for the CPE authenticates the user (the visited location UAAF for the CPE interacts with the home location NAAF for the CPE via the e5 interface to accomplish the authentication process for the CPE). After the authentication process is passed successfully, the visited location UAAF for the CPE binds the user-associated information (user ID information, the network location information of the CPE, and the user profile information), and reports the bound information to the CLF.

In step 3, if the CPE is a non-nomadic/non-roaming CPE, after receiving the access request transmitted from the AMF, the home location UAAF for the CPE directly authenticates the ID information of the non-nomadic/non-roaming user, and after the authentication is passed successfully, the home location UAAF for the CPE binds the user ID information and the user profile information with the current network location information of the CPE, and then transmits the bound information to the CLF.

Step 4: the NACF assigns IP address and other access configuration parameters to the CPE, binds the IP address with the user-associated information (e.g., network location information of the CPE), and then reports the bound information to the CLF.

The above step 3 and step 4 can be executed in any precedence order.

Step 5: the CLF correlates the user ID information, user profile information, IP address of the CPE, network location information of the CPE, and other user-associated information transmitted from the UAAF and the NACF automatically in real time, in accordance with the network location information.

Hereunder the method for correlating user-associated information for roaming/nomadic CPEs will be described in a case in which the predefined correlation information is the IP information of the CPE in the address information of the CPE.

Step 1. the CPE initiates an access request to the network; the ARF (Access Relay Function) relays the access request and inserts the network location information of the CPE into the access request.

Step 2: the AMF coordinates and forwards the access request transmitted from the ARF, i.e., the AMF requests the NACF to assign network configuration parameters (e.g., IP address), requests the UAAF to authenticate and authorize the user ID, and ensures the access request transmitted to the NACF contains the network location information of the CPE; since the predefined correlation information is the IP information of the CPE in the address information of the CPE, the access request transmitted to the UAAF may not contain the network location information of the CPE.

If the ARF doesn't insert the network location information of the CPE into the access request in step 1 but the AMF can obtain the network location information of the CPE, the AMF can insert the network location information of the CPE into the access request to be transmitted to the NACF by itself in step 2.

The interface protocol between the AMF and the NACF is DHCP or Radius; and the interface protocol between the AMF and the UAAF is Radius or Diameter.

Step 3: the NACF assigns an IP address to the CPE, binds the IP address with the user-associated information (e.g., network location information of the CPE), and reports the bound information to the CLF; at the same time, the NACF transmits the IP address assigned to the CPE to the AMF.

Step 4: the AMF transmits the IP address information of the CPE to the visited location UAAF for the CPE. If the AMF only requests the NACF to assign network configuration parameters (e.g., IP address) but doesn't request the UAAF to authenticate and authorize the user ID in step 2, the AMF can incorporate the IP address of the CPE into the access request and transmit the access request to the UAAF, to request the UAAF to authenticate and authorize the user ID. If AMF has requested the UAAF to authenticate and authorize the user ID in step 2, the AMF may not transmit the IP address information of the CPE via the access request to the UAAF; instead, it can transmit the IP address information of the CPE separately to the UAAF, or incorporate the IP address information in another message and transmit the IP address information to the UAAF, for example, the AMF can incorporate the IP address information into a billing message and transmit the IP address information to the UAAF.

Step 5: after receiving the access request transmitted from the AMF, the visited location UAAF for the CPE authenticates the user (the visited location UAAF for the CPE interacts with the home location UAAF for the CPE via the e5 interface to accomplish the authentication process for the CPE). After the authentication process is passed successfully, the visited location UAAF for the CPE binds the user-associated information (user ID information, the IP address information of the CPE, and the user profile information), and reports the bound information to the CLF.

In step 5, if the CPE is a non-nomadic/non-roaming CPE, after receiveing the access request transmitted from the AMF, the home location UAAF for the CPE directly authenticates the ID information of the non-nomadic/non-roaming user, and after the authentication is passed successfully, the home location UAAF for the CPE binds the user ID information and the user profile information with the IP address information of the CPE, and then transmits the bound information to the CLF.

Step 6: the CLF correlates the user ID information, user profile information, IP address of the CPE, network location information of the CPE, and other user-associated information transmitted from the UAAF and the NACF automatically in real time, in accordance with the network location information.

It can be seen from above description that the present invention can avoid the procedure of configuring partial correlation information statically in the CLF and simplify the user-associated information correlating process, and can correlate user-associated information dynamically in real time when the CPE accesses different networks or accesses different locations in the same network. Therefore, the present invention supports nomadic CPEs, and provides a practical, convenient, fast, and simplified method for correlating user-associated information for roaming/nomadic CPEs, and improves the user-associated information correlation mechanism.

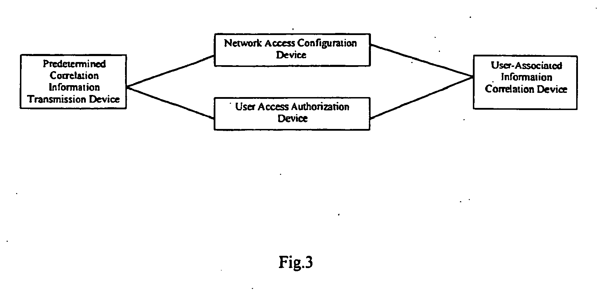

The system for correlating user-associated information provided in the present invention is shown in Fig.3, and mainly includes: a predefined correlation information transmission device, a network access configuration device, a user access authorization device, and a user-associated information correlation device. The predefined correlation information transmission device can be in the ARF or the AMF in the access network.

The-predefined correlation information transmission device is mainly designed to transmit predefined correlation information; in the case that the predefined correlation information is the network location information of the CPE, the predefined correlation information transmission device can include the predefined correlation information in an access request from the CPE, and transmit the access request to the access configuration device and the user access authorization device; in the case that the predefined correlation information is the IP address information of the CPE, the predefined correlation information transmission device can firstly transmit the access request containing the network location information of the CPE to the access configuration device, and then transmit the IP address information of the CPE to the user access authorization device when it receives the IP address of the CPE transmitted from the access configuration device.

The predefined correlation information transmission device can transmit the IP address to the user access authorization device as follows: incorporating the IP address information in the access request and then transmits the access request; incorporating transmits the IP address information separately, or incorporating the IP address information in another message and then transmit the message, for example, incorporating the IP address information in a billing message.

The network access configuration device can be in the NACF, and is mainly designed to assign IP address to the CPE and transmit the first user-associated information containing predefined correlation information to the user-associated information correlation device, for example, the network access configuration device can bind the IP address with the network location information of the CPE, and then report the bound information to the user-associated information correlation device.

The user access authorization device can be in the UAAF, and is mainly designed to authenticate the user, and, after the authentication is successful, transmit the second user-associated information containing predefined correlation information to the user-associated information correlation device. For example, the user access authorization device can bind the network location information of the CPE, user profile information, and user ID identification,., and report the bound information to the user-associated information correlation device.

The network access configuration device mainly includes: a predefined correlation information acquisition module 1, a configuration module, and a user-associated information transmission module 1.

The predefined correlation information acquisition module 1 is mainly designed to obtain the predefined correlation information from the message transmitted from the access network, and transmit the predefined correlation information to the user-associated information transmission module.

The configuration module is mainly designed to configure access parameters for the CPE in accordance with the access configuration request transmitted from the access network. Here, the access configuration parameters at least include the IP address assigned to the CPE.

The user-associated information transmission module 1 is mainly designed to transmit the first user-associated information containing predefined correlation information to the user-associated information correlation device, after the access parameters are configured for the CPE. Here, the predefined correlation information and first user-associated information is the information described in the above embodiments.

The user access authorization device mainly includes a predefined correlation information module 2, an authentication module, and a user-associated information transmission module 2.

The predefined correlation information acquisition module 2 is mainly designed to obtain the predefined correlation information from the message transmitted from the access network, and transmit the predefined correlation information to the user-associated information transmission module.

The authentication module is mainly designed to authenticate the user at the access authentication request transmitted from the access network, and, after the authentication succeeds, transmit the authentication success information to the user-associated information transmission module.

The user-associated information transmission module 2 is mainly designed to transmit the second user-associated information containing predefined correlation information to the user-associated information correlation device, after it receives the information associated with successful authentication. Here, the predefined correlation information and second user-associated information is the information described in the above embodiments.

The user-associated information correlation device can be in the CLF, and is mainly designed to correlate the first user-associated information with the second user-associated information, in accordance with the common predefined correlation information contained in the received first user-associated information and the second user-associated information.

The user-associated information correlation device mainly includes a user-associated information acquisition module and a correlation module.

The user-associated information acquisition module is mainly designed to receive the messages transmitted from the access configuration device and the user access authorization device, obtain first user-associated information and second user-associated information from the messages transmitted from the network access configuration device and the user access authorization device, and transmit the first user-associated information and the second user-associated information to the correlation module.

The correlation module is mainly designed to receive the first user-associated information and the second user-associated information transmitted from the user-associated information module, and correlates the first user-associated information with the second user-associated information in accordance with the common predefined correlation information commonly contained in the first user-associated information and the second user-associated information.

While the present invention has been illustrated and described with reference to some preferred embodiments, the present invention is not limited to these. Those skilled in the art should recognize that various variations and modifications can be made without departing from the scope of the present invention as defined by the accompanying claims.

## Claims

1. A method for correlating user-associated information in a network attachment subsystem, said method comprising the following steps:
an Access Management Function entity, AMF, receiving an access request initiated by a Customer Premises Equipment, CPE,
said AMF coordinating and forwarding said request, wherein
- the AMF requests a Network Access Configuration Function entity, NACF, to assign an IP-address to said CPE,
- said NACF transmits the IP-address assigned to the CPE to the AMF,
- said AMF transmits the IP-address information of said CPE to a User Access Authorisation Function entity, UAAF, wherein the AMF transmits said IP-address information to the UAAF by
• incorporating the IP-address of the CPE into the access request and transmitting the access request to the UAAF, or
• transmitting the IP-address information separately to the UAAF, or
• incorporating the IP-address information in another message to the UAAF, in particular a billing message,
transmitting first user-associated information containing IP-address information by said NACF to a Connectivity Session Location Function entity, CLF; and
transmitting second user-associated information containing IP-address information by said UAAF to the CLF; and
correlating the first user-associated information with the second user-associated information, by the CLF, in accordance with the IP-address information.

2. A system for correlating user-associated information in a network attachment subsystem, said system comprising:
an Access Management Function entity, AMF; a Network Access Configuration Function entity, NACF; a User Access Authorisation Function entity, UAAF; and a Connectivity Session Location Function entity, CLF,
said AMF being adapted for receiving an access request initiated by a Customer Premises Equipment, CPE,
said AMF being adapted for coordinating and forwarding said request, wherein
- the AMF is adapted for requesting said NACF to assign an IP-address to said CPE,
- said NACF is adapted for transmitting the IP-address assigned to the CPE to the AMF,
- said AMF is adapted for transmitting the IP-address information of said CPE to said UAAF, wherein the AMF transmits said IP-address information to the UAAF by
• incorporating the IP-address of the CPE into the access request and transmitting the access request to the UAAF, or
• transmitting the IP-address information separately to the UAAF, or
• incorporating the IP-address information in another message to the UAAF, in particular a billing message,
said NACF being adapted for transmitting first user-associated information containing IP-address information to said CLF; and
said UAAF being adapted for transmitting second user-associated information containing IP-address information to the CLF; and
said CLF being adapted for correlating the first user-associated information with the second user-associated information, in accordance with the IP-address information.

## Patentansprüche

1. Verfahren zum Korrelieren benutzerzugeordneter Informationen in einem Netzanschluss-Untersystem, wobei das Verfahren die folgenden Schritte umfasst:
Empfangen einer durch eine Ausrüstung in den Räumlichkeiten des Kunden CPE eingeleiteten Zugriffsanforderung durch eine Zugriffsmanagementfunktions-Entität AMF,
wobei die AMF die Anforderung koordiniert und weiterleitet, wobei
- die AMF eine Netzzugriffskonfigurationsfunktions-Entität NACF auffordert, der CPE eine IP-Adresse zuzuweisen,
- die NACF die der CPE zugewiesene IP-Adresse zu der AMF überträgt,
- die AMF die IP-Adressen-Informationen der CPE zu einer Benutzerzugriffsautorisierungsfunktions-Entität UAAF überträgt, wobei die AMF die IP-Adressen-Informationen zu der UAAF überträgt, indem sie
• die IP-Adresse der CPE in die Zugriffsanforderung aufnimmt und die Zugriffsanforderung zu der UAAF überträgt, oder
• die IP-Adressen-Informationen separat zu der UAAF überträgt oder
• die IP-Adressen-Informationen in eine weitere Nachricht, insbesondere eine Abrechnungsnachricht, an die UAAF aufnimmt,
Übertragen erster benutzerzugeordneter Informationen, die IP-Adressen-Informationen enthalten, durch die NACF zu einer Anschließbarkeitssitzungs-Ortsfunktions-Entität CLF; und
Übertragen zweiter benutzerzugeordneter Informationen, die IP-Adressen-Informationen enthalten, durch die UAAF zu der CLF; und
Korrelieren der ersten benutzerzugeordneten Informationen mit den zweiten benutzerzugeordneten Informationen durch die CLF in Übereinstimmung mit den IP-Adressen-Informationen.

2. System zum Korrelieren benutzerzugeordneter Informationen in einem Netzanschluss-Untersystem, wobei das System Folgendes umfasst:
eine Zugriffsmanagementfunktions-Entität AMF; eine Netzzugriffskonfigurationsfunktions-Entität NACF; eine Benutzerzugriffsautorisierungsfunktions-Entität UAAF; und eine Anschließbarkeitssitzungs-Ortsfunktions-Entität CLF,
wobei die AMF beschaffen ist, um eine durch eine Ausrüstung in den Räumlichkeiten des Kunden CPE eingeleitete Zugriffsanforderung zu empfangen,
wobei die AMF beschaffen ist, um die Anforderung zu koordinieren und weiterzuleiten, wobei
- die AMF beschaffen ist, um die NACF aufzufordern, der CPE eine IP-Adresse zuzuweisen, - die NACF beschaffen ist, um die der CPE zugewiesene IP-Adresse zu der AMF zu übertragen,
- die AMF beschaffen ist, um die IP-Adressen-Informationen der CPE zu der UAAF zu übertragen, wobei die AMF die IP-Adressen-Informationen zu der UAAF überträgt, indem sie
• die IP-Adresse der CPE in die Zugriffsanforderung aufnimmt und die Zugriffsanforderung zu der UAAF überträgt, oder
• die IP-Adressen-Informationen separat zu der UAAF überträgt, oder
• die IP-Adressen-Informationen in eine weitere Nachricht, insbesondere eine Abrechnungsnachricht, an die UAAF aufnimmt,
wobei die NACF beschaffen ist, um erste benutzerzugeordnete Informationen, die IP-Adressen-Informationen enthalten, zu der CLF zu übertragen; und
wobei die UAAF beschaffen ist, um zweite benutzerzugeordnete Informationen, die IP-Adressen-Informationen enthalten, zu der CLF zu übertragen; und
wobei die CLF beschaffen ist, um die ersten benutzerzugeordneten Informationen mit den zweiten benutzerzugeordneten Informationen in Übereinstimmung mit den IP-Adressen-Informationen zu korrelieren.

## Revendications

1. Procédé de corrélation d'informations d'utilisateur dans un sous-système d'attachement au réseau, ledit procédé comprenant les étapes suivantes :
la réception par une entité de Fonction de Gestion d'Accès, AMF, d'une requête d'accès lancée par un Equipement d'Abonné, CPE,
la coordination et l'acheminement de ladite requête par ladite AMF, où
- l'AMF demande à une entité de Fonction de Configuration d'Accès au Réseau, NACF, d'attribuer une adresse IP audit CPE,
- ladite NACF transmet à l'AMF l'adresse IP attribuée au CPE,
- ladite AMF transmet l'information d'adresse IP dudit CPE à une entité de Fonction d'Autorisation d'Accès Utilisateur, UAAF, l'AMF transmettant ladite information d'adresse IP à l'UAAF en
• incorporant l'adresse IP du CPE dans la requête d'accès et transmettant la requête d'accès à l'UAAF, ou
• transmettant l'information d'adresse IP séparément à l'UAAF, ou
• incorporant l'information d'adresse IP dans un autre message pour l'UAAF, en particulier un message de facturation,
la transmission de premières informations d'utilisateur contenant l'information d'adresse IP par ladite NACF à une entité de Fonction de Position de Session de Connectivité, CLF ; et
la transmission de secondes informations d'utilisateur contenant l'information d'adresse IP par ladite UAAF à la CLF ; et
la corrélation des premières informations d'utilisateur avec les secondes informations d'utilisateur, par la CLF, en fonction de l'information d'adresse IP.

2. Système de corrélation d'informations d'utilisateur dans un sous-système d'attachement au réseau, ledit système comprenant :
une entité de Fonction de Gestion d'Accès, AMF ; une entité de Fonction de Configuration d'Accès au Réseau, NACF ; une entité de Fonction d'Autorisation d'Accès Utilisateur, UAAF ; et une entité de Fonction de Position de Session de Connectivité, CLF,
ladite AMF étant adaptée pour recevoir une requête d'accès lancée par un Equipement d'Abonné, CPE,
ladite AMF étant adaptée pour coordonner et acheminer ladite requête, où
- l'AMF est adaptée pour demander à ladite NACF d'attribuer une adresse IP audit CPE,
- ladite NACF est adaptée pour transmettre à l'AMF l'adresse IP attribuée au CPE,
- ladite AMF est adaptée pour transmettre l'information d'adresse IP dudit CPE à ladite UAAF, l'AMF transmettant ladite information d'adresse IP à l'UAAF en
• incorporant l'adresse IP du CPE dans la requête d'accès et transmettant la requête d'accès à l'UAAF, ou
• transmettant l'information d'adresse IP séparément à l'UAAF, ou
• incorporant l'information d'adresse IP dans un autre message pour l'UAAF, en particulier un message de facturation,
ladite NACF étant adaptée pour transmettre des premières informations d'utilisateur contenant l'information d'adresse IP à ladite CLF ; et
ladite UAAF étant adaptée pour transmettre des secondes informations d'utilisateur contenant l'information d'adresse IP à ladite CLF ; et
ladite CLF étant adaptée pour corréler les premières informations d'utilisateur avec les secondes informations d'utilisateur, en fonction de l'information d'adresse IP.
